(19) Europäisches Patentamt / European Patent Office / Office européen des brevets

(11) **EP 2 122 129 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(51) Int Cl.:
*F02C 9/38* *(2006.01)*  *F01D 15/10* *(2006.01)*
*F02C 9/28* *(2006.01)*

(21) Anmeldenummer: **08708855.5**

(22) Anmeldetag: **11.02.2008**

(86) Internationale Anmeldenummer:
**PCT/EP2008/051596**

(87) Internationale Veröffentlichungsnummer:
**WO 2008/098891 (21.08.2008 Gazette 2008/34)**

(54) **KRAFTWERKSANLAGE SOWIE VERFAHREN ZU DEREN BETRIEB**

POWER PLANT SYSTEM AND METHOD FOR THE OPERATION THEREOF

CENTRALE ÉLECTRIQUE ET PROCÉDÉ DE FONCTIONNEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.02.2007 CH 245072007**
        **14.02.2007 CH 247072007**

(43) Veröffentlichungstag der Anmeldung:
**25.11.2009 Patentblatt 2009/48**

(73) Patentinhaber: **General Electric Technology GmbH**
**5400 Baden (CH)**

(72) Erfinder:
• **HOFFMANN, Jürgen**
**CH-5417 Untersiggenthal (CH)**
• **MEINDL, Thomas**
**CH-5416 Kirchdorf (CH)**

(74) Vertreter: **General Electric Technology GmbH**
**Global Patent Operation - Europe**
**Brown Boveri Strasse 7**
**5400 Baden (CH)**

(56) Entgegenhaltungen:
WO-A-2005/124985  WO-A-2006/103159
DE-A1- 10 336 659  JP-A- 62 077 098
US-A- 5 694 026  US-A1- 2004 119 293
US-A1- 2005 001 598

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHES GEBIET

Die vorliegende Erfindung bezieht sich auf das Gebiet der Kraftwerkstechnik. Sie betrifft eine Kraftwerksanlage elektronischer Entkopplung oder elektronischer Frequenzwandlung zwischen Gasturbine und Netz sowie ein Verfahren zum Betrieb eines derartigen Kraftwerks.

STAND DER TECHNIK

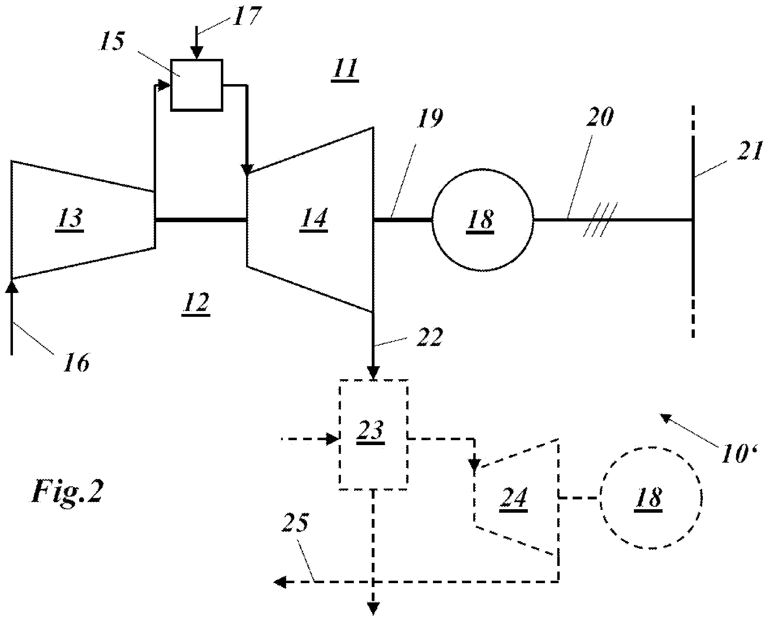

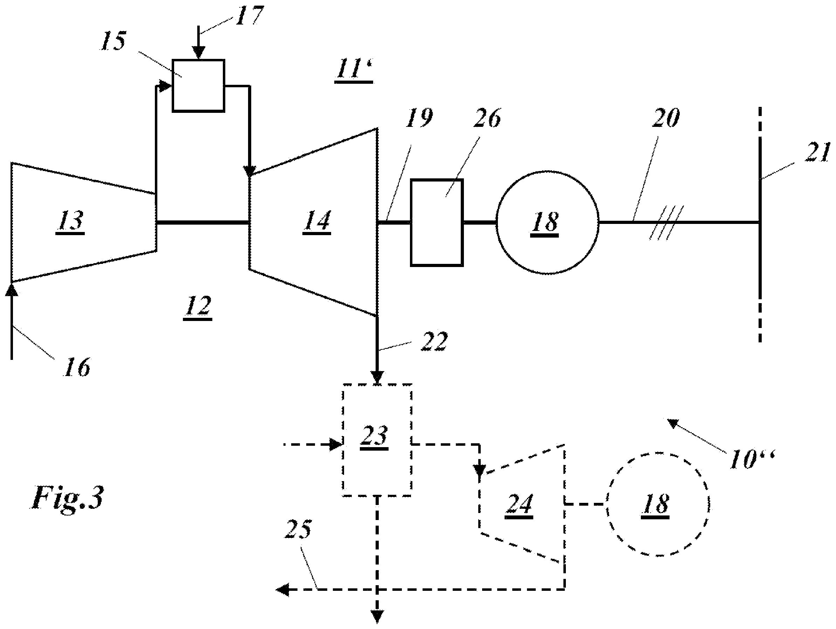

Grosse Kraftwerksanlagen mit Leistungen im Bereich von mehr als 100 MW, bei denen ein Strom erzeugender Generator von einer Gas- und/oder Dampfturbine angetrieben wird und die erzeugte elektrische Leistung in ein Netz mit vorgegebener Netzfrequenz (z.B. 50 oder 60 Hz) einspeist, haben üblicherweise eine feste Kopplung zwischen der (mechanischen) Drehzahl der Turbine und der Netzfrequenz. Der Ausgang des Generators ist dabei über eine Netzverbindung frequenzstarr mit dem Netz verbunden, während er von der Turbine entweder direkt (1-Wellenanlage) oder über ein mechanisches Getriebe drehzahlgekoppelt angetrieben wird. Derartige Konfigurationen von Kraftwerksanlagen sind in den Fig. 2 und 3 stark vereinfacht wiedergegeben. Mittels Getriebe sind nur feste Übersetzungsverhältnisse zwischen Netzfrequenz und Turbine realisierbar. Es sind aber auch Lösungen denkbar, bei denen der Generator von einer Nutzturbine angetrieben wird, die mit einer von der eigentlichen Gasturbine abweichenden Drehzahl gefahren werden kann.

Fig. 2 zeigt in einer stark vereinfachten Darstellung eine Kraftwerksanlage 10' bekannter Art, die mittels einer Gasturbine 12 mit angekoppeltem Generator 18 Strom erzeugt und in ein Netz 21 einspeist. Die Gasturbine 12 und der Generator 18 sind durch eine gemeinsame Welle 19 verbunden und bilden einen 1-Wellen-Turbinenstrang 11. Die Gasturbine umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird.

Die aus der Brennkammer 15 austretenden heissen Gase werden in einer nachfolgenden Turbine 14 unter Arbeitsleistung entspannt und treiben so den Verdichter 13 und den angekoppelten Generator 18 an. Das beim Austritt aus der Turbine noch relativ heisse Abgas kann zusätzlich durch einen nachfolgenden Abhitzedampferzeuger 23 geschickt werden, um in einem separaten Wasser-Dampf-Kreislauf 25 Dampf für den Betrieb einer Dampfturbine 24 zu erzeugen. Eine solche Kombination wird als Kombikraftwerk bezeichnet. Die Dampfturbine 24 kann dabei mit dem Generator 18 auf der der Turbine 14 gegenüberliegenden Seite gekoppelt sein. Sie kann aber auch einen eigenen Generator antreiben.

Bei der 1-Wellen-Anlage der Fig. 2 steht die Drehzahl der Gasturbine 12 in einem festen Verhältnis zur im Generator 18 erzeugten Frequenz der Wechselspannung, die gleich der Netzfrequenz des Netzes 21 sein muss. Bei den heutzutage üblichen grossen Gasturbineneinheiten mit Leistungen von über 100 MW ist der Generatorfrequenz bzw. Netzfrequenz von 60 Hz eine Drehzahl der Gasturbine von 3600 U/min (z.B. Gasturbine GT24 der Anmelderin) und der Generatorfrequenz von 50 Hz eine Drehzahl von 3000 U/min (z.B. Gasturbine GT26 der Anmelderin) zugeordnet.

Soll ein anderes Verhältnis zwischen der Drehzahl der Gasturbine 12 und der Generator- bzw. Netzfrequenz erreicht werden, kann gemäss Fig. 3 in einer Kraftwerksanlage 10" grundsätzlich zwischen der Welle 19 der Gasturbine 12 und dem Generator 18 (Turbinenstrang 11') ein mechanisches Getriebe 26 eingefügt werden, das üblicherweise als Reduziergetriebe ausgebildet ist und damit höhere Drehzahlen und kleinere Bauweisen der Gasturbine 12 ermöglicht. Derartige mechanische Getriebe 26 sind jedoch aus Festigkeitsgründen nur für Leistungen kleiner als 100 MW einsetzbar. Auf der anderen Seite werden die grossen Leistungen pro Gasturbine von über 100 MW und die hohen Wirkungsgrade vor allem mit vergleichsweise langsam rotierenden 1-Wellen-Maschinen erreicht.

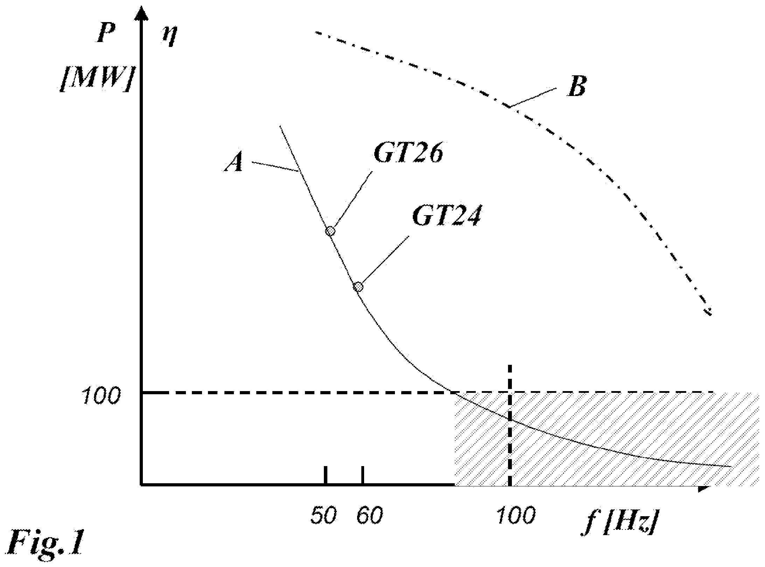

Es ergibt sich dann die in Fig. 1 dargestellte Situation: Oberhalb von 100 MW Nutzleistung gibt es einzelne 1-Wellen-Gasturbinen, die auf eine feste Drehzahl von entweder 3000 U/min (für 50Hz; GT26) oder 3600 U/min (für 60 Hz; GT24) ausgelegt und optimiert sind (F. Joos et al., Field experience with the sequential combustion system of the GT24/GT26 gas turbine family, ABB Review no.5, p.12-20 (1998)). Oberhalb von 100 Hz und bei Leistungen unterhalb 100 MW sind durch Konfigurationen mit Nutzturbine oder Getriebe, oder durch Mehrwellen-Gasturbinen nahezu beliebige Wechselspannungsfrequenzen möglich (schraffierter Bereich in Fig. 1). Die Leistungen der Gasturbinen über der Frequenz folgen dabei einer Kurve A, während der Wirkungsgrad η der Kurve B folgt. Grosse Leistungen mit hohen Wirkungsgraden lassen sich also vor allem bei niedrigen Drehzahlen erreichen, wo jedoch nur singuläre Lösungen zur Verfügung stehen.

Um bei den singulären Lösungen die Herstellungskosten zu reduzieren, ist in der US-A-5,520,512 bereits vorgeschlagen worden, bei Gasturbinenanlagen für unterschiedliche Netzfrequenzen zumindest Teile der Turbinen gleich auszubilden. Die starre Kopplung zwischen der Drehzahl der Gasturbine und der Netzfrequenz bleibt dabei jedoch unverändert.

In der US-B2-6,628,005 ist vorgeschlagen worden, eine 1-Wellenanlage aus Turbine und Generator mit einer vorgegebenen Drehzahl dadurch für unterschiedliche Netzfrequenzen von 50 Hz und 60 Hz einsetzbar zu machen, dass eine Generatorfrequenz zwischen beiden Netzfrequenzen von z.B. 55 Hz gewählt wird, und je nach Netzfrequenz 5 Hz mittels eines Frequenz-Differentiators addiert oder subtrahiert werden. Auch hier bleibt eine starre Kopplung erhalten.

Folgende Nachteile resultieren aus der starren Kopplung zwischen Turbinendrehzahl und Netzfrequenz für existierende Anlagenkonzepte mit existierenden Turbokomponenten:

- Ein stabiler Betrieb am Netz ist nur eingeschränkt möglich.
- Es kommt zu Leistungseinbrüchen bei der Turbine, bzw. zu hoher thermischer und mechanischer Belastung bei der dynamischen Regelung zur Netzfrequenzstützung durch Anhebung der Gasturbineneintrittstemperatur.
- Schnelle Transiente führen zu erhöhten Belastungen.
- Eine Netzfrequenz-unabhängige Leistungsregelung der Kraftwerksanlage ist nicht möglich.
- Eine Netzfrequenz-unabhängige Wirkungsgradoptimierung der Kraftwerksanlage ist nicht möglich.
- Eine Netzfrequenz-unabhängige Teillastoptimierung der Kraftwerksanlage ist nicht möglich.
- Eine Emissionsregelung der Gasturbine ist nur eingeschränkt möglich.

Folgende Nachteile resultieren aus der starren Kopplung zwischen Turbinendrehzahl und Netzfrequenz für existierende Anlagenkonzepte mit neu zu entwickelnden Komponenten beziehungsweise Neuanlagen:

- Verdichter und Turbinen können bei fester Frequenzkopplung nicht im Optimalpunkt ausgelegt werden, wie das im Fall einer Frequenz-Unabhängigkeit möglich ist.
- Gas- und Dampfturbinen, welche mit fester 50Hz- bzw. 60 Hz-Netzfrequenzkopplung ausgelegt werden, sind bei einer gewünschten Leistung nicht zwangsläufig kostenoptimal, da durch die vorgegebene Drehzahl aerodynamische oder mechanische Auslegungsgrenzen die Optimierung behindern, welche im Fall einer Drehzahlvariabilität besser aufeinander abgestimmt werden können.
- Durch die vorgegebene Kopplung an die Netzfrequenz sind Kraftwerksturbinen in ihrer Leistungsgröße limitiert (siehe Kurve A in Fig.1).
- Die Gasturbinen können nicht optimal auf variable Umgebungsbedingungen abgestimmt werden

Aus der US-A-5,694,026 ist ein 1-Wellen-Turbinen-Generator-Satz ohne Untersetzungsgetriebe bekannt, bei dem zwischen dem Ausgang des Generators und dem Netz ein statischer Frequenzumrichter angeordnet ist, mit dessen Hilfe die vom Generator erzeugte Wechselspannungs-Frequenz in die Frequenz des Netzes umgesetzt wird. Beim Starten der Gasturbine wird der Generator als Motor benutzt, der aus dem Netz über den statischen Frequenzumrichter mit Energie versorgt wird. Der Umrichter enthält einen aus einer Induktivität gebildeten Gleichstromzwischenkreis.

Aus der US-B2-6,979,914 ist eine Kraftwerksanlage mit einer 1-Wellen-Anordnung aus Gasturbine und Generator bekannt, bei der ebenfalls ein Umrichter zwischen Generatorausgang und Netz vorgesehen ist, um die vom Generator erzeugte Wechselspannung an die Netzfrequenz anzupassen. Hier ist im Umrichter ein Gleichspannungszwischenkreis angeordnet.

Aus dem Artikel von L.J.J Offringa, L.J.J. et al. "A 1600 kW IGBT converter with interphase transformer for high speed gas turbine power plants", Proc. IEEE - IAS Conf. 2000. 4, 8-12 October 2000, Rome, 2000, pp. 2243-2248, ist eine Kraftwerksanlage mit schnell rotierender Gasturbine (18000 U/min) und vergleichsweise kleiner Ausgangsleistung (1600 kW) bekannt, bei der eine Frequenzentkopplung zwischen Generator und Netz durch einen Umrichter mit Gleichspannungszwischenkreis erreicht wird.

Aus der WO2006/103159 A1 ist eine Vorrichtung zur Erzeugung elektrischer Leistung aus mechanischer Leistung bekannt, die einen Generator zur Umwandlung von mechanischer Leistung in einen Mehrphasen-Wechselstrom und einen Matrix-Konverter, für die Wandlung des Mehrphasen-Wechselstroms in den gewünschten Ausgangs-Wechselstrom, umfasst.

In den bekannten Kraftwerksanlagen mit Entkopplung zwischen Generatorausgang und Netz durch einen Frequenzumrichter mit Gleichstrom- oder Gleichspannungszwischenkreis ergibt sich der Nachteil, dass die Umrichter nicht unerhebliche Leistungsverluste mit sich bringen, die bei Kraftwerksanlagen mit 1-Wellen-Turbinenstrang und Leistungen von mehr als 100 MW einen Teil der in diesem Bereich erzielten Wirkungsgradverbesserung wieder zunichte machen.

DARSTELLUNG DER ERFINDUNG

Es ist Aufgabe der Erfindung, eine Kraftwerksanlage zu schaffen, welche die Nachteile bekannter Kraftwerksanlagen vermeidet und sich insbesondere durch einen flexiblen Betrieb bei gleichzeitig hohem Wirkungsgrad auszeichnet, sowie ein Verfahren zu deren Betrieb anzugeben.

Der Grundgedanke der Erfindung liegt in darin, einen Gasturbinen-Generator-Satz mittels einer elektronischen Vorrichtung frequenzmässig vom Netz zu lösen.. Diese Vorrichtung ist beispielsweise als Matrixumrichter ausgebildet. Hierdurch lässt sich die Gasturbine im Auslegung und Betrieb optimal auf unterschiedliche Randbedingungen einstellen und einregeln, ohne dass der hohe Wirkungsgrad wesentlich verringert wird.

Gemäss einer Ausgestaltung der Erfindung unterscheidet sich die Betriebsfrequenz deutlich von der Netzfrequenz, wobei insbesondere die Betriebsfrequenz kleiner als die Netzfrequenz ist, und die Netzfrequenz 50 Hz oder 60 Hz beträgt. Bei einer bevorzugten Ausführung beträgt die Netzfrequenz 60 Hz und die Betriebsfrequenz liegt bei 50 Hz.

Die Betriebsfrequenz kann aber auch grösser sein als die Netzfrequenz, die vorzugsweise 50 Hz oder 60 Hz beträgt. Insbesondere kann die Netzfrequenz 50 Hz betragen und die Betriebsfrequenz bei 60 Hz liegen.

Eine andere Ausgestaltung der Erfindung ist dadurch gekennzeichnet, dass der Matrixumrichter eine Mehrzahl von in einer (m x n)-Matrix angeordneten, steuerbaren bidirektionalen Schaltern umfasst, welche von einem Regler gesteuert m Eingänge wahlweise mit n Ausgängen verbinden, wobei m grösser n ist, und wobei erste Mittel zur Bestimmung der Vorzeichen der Ströme in den Eingängen und zweite Mittel zur Bestimmung der Vorzeichen der Spannungen zwischen den Eingängen vorgesehen sind, und wobei die ersten und zweiten Mittel mit dem Regler in Wirkverbindung stehen. Bidirektionale Schalter können aus einem Bauteil bestehen aber auch aus mehreren Bauteilen aufgebaut sein. Beispielsweise können zwei anti- parallele Thyristoren mit entgegengesetzter Durchschaltrichtung als steuerbare bidirektionale Schalter verwendet werden. Die Mittel zur Bestimmung der Vorzeichen von Strömen und Spannung können beispielsweise Strom- bzw. Spannungsmesser sein. Alternativ sind z. B. auch binäre Geber, die nur das Vorzeichen ausgeben, anwendbar.

Gemäss einer weiter Ausgestaltung der Erfindung wird die elektronische Entkopplungsvorrichtung als ein variables elektronisches Getriebe verwendet. Damit lässt sich eine zuverlässige Drehzahlregelung einer mit dem Netz verbundenen Gasturbine realisieren. Dieses variable elektronische Getriebe lässt sich beispielsweise durch einen Matrixumrichter realisieren.

Die Regelung der Drehzahl erfolgt dadurch, dass die Solldrehzahl an das variable elektronische Getriebe übertragen wird und über den Generator die Drehzahl auf die Gasturbine aufgezwungen wird. Der Generator stützt sich über das variable elektronische Getriebe dabei gegen das im Vergleich zur Gasturbine quasi statische Netz ab und zwingt durch die Regelung des Frequenzverhältnisses zwischen mechanischer Drehzahl und Netzfrequenz der Gasturbine die Solldrehzahl auf.

Gemäss einer Ausgestaltung der Erfindung ist das Übersetzungsverhältnis von Gasturbinendrehzahl zu Netzfrequenz des variablen elektronischen Getriebes kleiner als eins. Insbesondere beträgt es beispielsweise fünf sechstel.

Das Übersetzungsverhältnis von Gasturbinendrehzahl zu Netzfrequenz des variablen elektronischen Getriebes aber auch grösser als eins sein. Insbesondere beträgt es beispielsweise sechs fünftel.

Eine weitere Ausgestaltung erlaubt eine flexible Drehzahlregelung um ein Auslegungsübersetzungsverhältnis.

Die Solldrehzahl wird abhängig von der Auslegung und den Betriebsbedingungen der Gasturbine bestimmt. Dies kann beispielsweise in der Regelung der Gasturbine erfolgen, von der aus die Solldrehzahl zu dem Regler des variablen Getriebes übertragen wird. Eine Bestimmung der Solldrehzahl ist auch in einem separaten Regler oder einem übergeordneten Unit Kontroller, der die Regelung von Gasturbine und Dampfturbine in einem Kombikraftwerk koordiniert, denkbar.

Eine weitere Ausgestaltung der Erfindung zeichnet sich durch eine Gasturbine aus, deren Auslegung auf den Betrieb in einem Kraftwerk mit elektronischer Entkopplung von dem Netz optimiert ist.

Eine weitere Ausgestaltung mit besonders hohem Wirkungsgrad und niedrigen Emissionswerten zeichnet sich dadurch aus, dass die Gasturbine als Gasturbine mit sequentieller Verbrennung ausgebildet ist.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    in einem Diagramm die Abhängigkeit der möglichen Leistung (Kurve A) und des Wirkungsgrads (Kurve B) einer Gasturbinenanlage von der Betriebsfrequenz;

Fig. 2    ein stark vereinfachtes Schaltbild einer Kraftwerksanlage mit Gasturbine und einem 1-Wellen-Turbinenstrang nach dem Stand der Technik;

Fig. 3    ein stark vereinfachtes Schaltbild einer Kraftwerksanlage mit Gasturbine und einem mechanischen Getriebe nach dem Stand der Technik;

Fig. 4    ein stark vereinfachtes Schaltbild einer Kraftwerksanlage mit Gasturbine und einer elektronischen Entkopplungsvorrichtung gemäss seinem Ausführungsbeispiel der Erfindung;

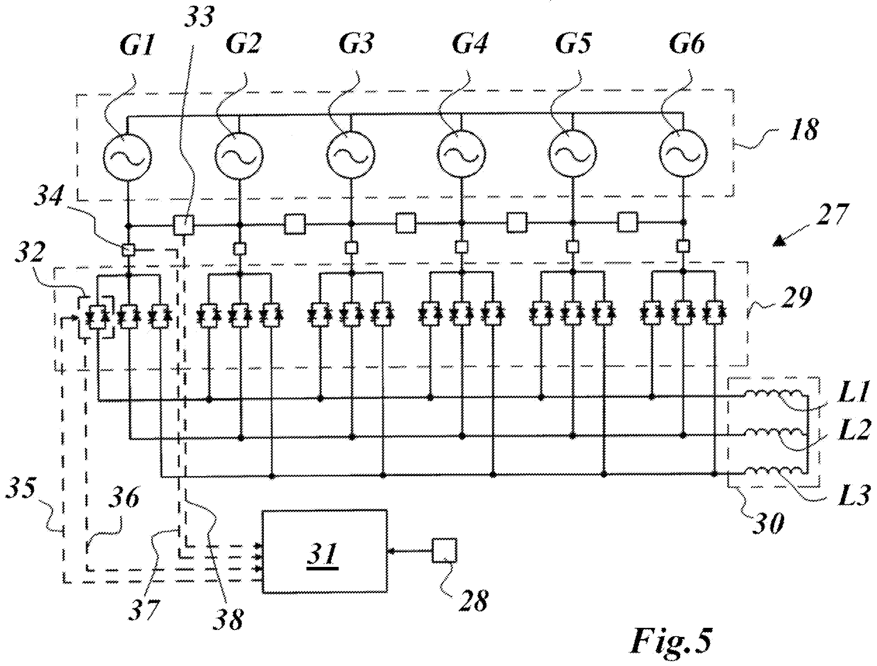

Fig. 5    den beispielhaften inneren Aufbau eines Matrixumrichters, wie er als elektronische Entkopplungsvorrichtung in einer Anlage nach Fig. 4 zum Einsatz kommen kann;

Fig. 6    eine zu Fig. 4 vergleichbare Anlage mit verschiedenen Möglichkeiten der Regelung nach der Erfindung;

Fig. 7    die Abhängigkeit eines unteren Drehzahllimits von der Kompressoreinlasstemperatur.

Fig. 8    den Verdichterwirkungsgrad in Abhängigkeit von der aerodynamischen Drehzahl;

Fig. 9　die Regelung der aerodynamischen Drehzahl $n^*$ und der mechanischen Drehzahl $n_{mech}$ über die Verdichtereintrittstemperatur $T_{K1}$; und

Fig. 10　den Verlauf des normierten Kühlluftdruckverhältnisses $\pi_{cool}$ und des normierten Kühlluftmassenstromes $m_{cool}$ über Verdichtereintrittstemperatur $T_{k1}$ für ein Kühlluftsystem der Gasturbine.

WEGE ZUR AUSFÜHRUNG DER ERFINDUNG

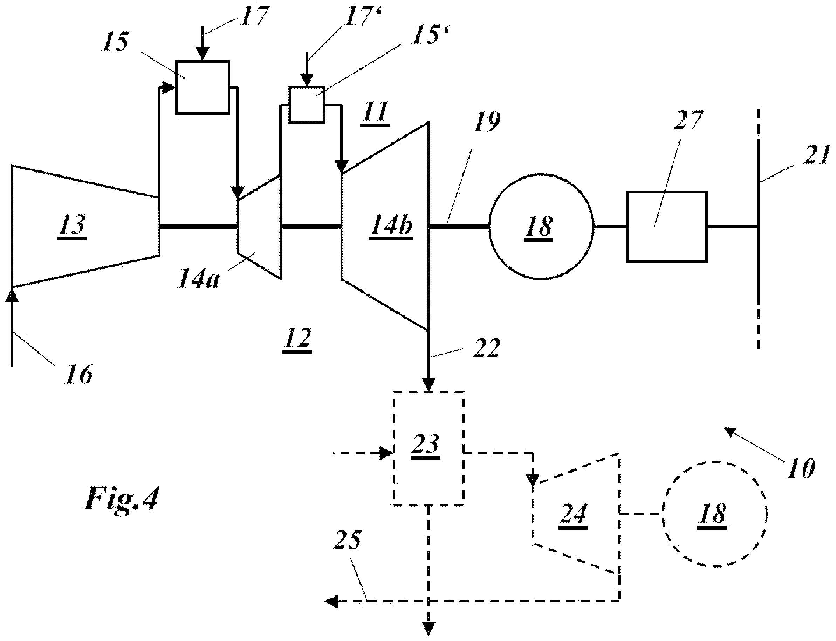

In Fig. 4 ist in einem stark vereinfachten Schaltbild eine Kraftwerksanlage mit Gasturbine und einer elektronischen Entkopplungsvorrichtung gemäss einem Ausführungsbeispiel der Erfindung wiedergegeben. Die Kraftwerksanlage 10 umfasst eine Gasturbine 12 mit einem Verdichter 13 und sequentieller Verbrennung, bei der eine erste Brennkammer 15 mit einem ersten Brennstoff über eine erste Brennstoffzufuhr 17 Heissgas erzeugt, dass in einer ersten Turbine 14a entspannt wird, dann in eine zweite Brennkammer 15' geleitet wird, wo es mit einem zweiten Brennstoff über eine zweite Brennstoffzufuhr 17' eine zweite Erhöhung der Temperatur des Heissgases bewirkt, das dann in der zweiten Turbine 14b entspannt wird. Anstelle der im Hinblick auf den Wirkungsgrad besonders günstigen sequentiellen Verbrennung kann aber auch eine einstufige Verbrennung vorgesehen werden. Die übrigen Teile der Anlage entsprechen den Teilen mit gleichem Bezugszeichen in den Fig. 2 oder 3.

Der Generator 18 ist direkt an die Welle 19 der Gasturbine 12 angekuppelt. Damit dreht der Generator 18 mit derselben Drehzahl wie die Gasturbine 12. Zwischen dem Ausgang des Generators 18 und dem Netz 21 ist nunmehr jedoch eine elektronische Entkopplungsvorrichtung oder ein variables elektronisches Getriebe 27 angeordnet, die eine Entkopplung der im Generator 18 erzeugten Betriebsfrequenz bzw. der Drehzahl der Gasturbine 12 von der vorgegebenen Netzfrequenz des Netzes bewirkt und eine Regelung der mechanischen Drehzahl $n_{mech}$ der Gasturbine 12 erlaubt.

Die elektronische Entkopplungsvorrichtung oder das variable elektronische Getriebe 27 ist - um die Verlustleistung zu begrenzen - vorzugsweise als Matrixumrichter ohne Gleichstromzwischenkreis ausgebildet. Ein solcher Matrixumrichter, der aufgrund seiner Ansteuerung besonders verlustarm arbeitet, ist in der EP-A2-1 199 794 im Aufbau und in der Wirkungsweise beschrieben worden. Weitere Ausführungen zu einem solchen Matrixumrichter sind in der EP-A1-1 561 273, in der DE-A1-10 2004 016 453, der DE-A1-10 2004 016 463 und der DE-A1-10 2004 016 464 gemacht worden. In Fig. 4 ist das Prinzipschaltbild eines Matrixumrichters mit 6 Eingangsphasen und 3 Ausgangsphasen dargestellt. Der Matrixumrichter (27) verbindet in einer zeitlichen Abfolge 6 Phasen G1,..,G6 eines Generators 18 als Quelle mit 3 Phasen L1,..,L3 einer Last 30. Der dazu benötigte Leistungsteil 29 umfasst 18 bidirektionale Schalter 32 in Form von antiparallel geschalteten Thyristoren (im allgemeinen Fall gibt es m x n Schalter für m Eingangs/Quellen-Phasen und n Ausgangs/Last-Phasen). Die Schalter 32 sind in einer (6 x 3)-Matrix angeordnet. Für die Ansteuerung der Schalter 32 ist eine Steuerung oder ein Regler 31 vorgesehen, der von einem Taktgeber 28 Zeitsignale (eine Taktfrequenz) erhält. Der Schaltzustand der Schalter 32 (EIN, AUS) wird überwacht und jeweils über eine erste Signalleitung 36 an den Regler 31 gemeldet. Die Schalter 32 werden von dem Regler 31 jeweils über eine Steuerleitung 35 angesteuert.

In den einzelnen Phasen G1,..,G6 des Generators 18 ist jeweils eine Strommesseinrichtung 34 angeordnet, die das Vorzeichen des Phasenstromes über eine zweite Signalleitung 37 an den Regler 31 meldet. Weiterhin sind zwischen den Phasen G1,..,G6 des Generators 18 Spannungsmesseinrichtungen 33 angeordnet, die das Vorzeichen der jeweiligen Phasendifferenzspannung über eine dritte Signalleitung 38 an den Regler 31 melden. Zu den Einzelheiten des Betriebsablaufs des Matrixumrichters wird auf die o.g. Druckschriften verwiesen.

Alternativ zu der reinen Frequenzentkopplung zwischen dem Ausgang des Generators 18 und dem Netz 21 kann die Entkopplungsvorrichtung 27 als ein variables elektronisches Getriebe 27 ausgeführt sein, das der Gasturbine über den Generator 18 geregelt eine Betriebsfrequenz bzw. Drehzahl $n_{mech}$ aufzwingt, die unabhängig von der Netzfrequenz F ist. Das Übersetzungsverhältnis X des variablen elektronischen Getriebes 27 wird abhängig von der Solldrehzahl 51 und der tatsächlichen Netzfrequenz F bestimmt.

Mit dem variablen elektronischen Getriebe oder der Entkopplungsvorrichtung 27, insbesondere in Form eines Matrixumrichters der beschriebenen Art, ergeben sich die folgenden Vorteile:

- Bei starrer Frequenzkupplung ist ein Betrieb der Gasturbine nur bis zu Frequenzabweichungen von 5-6% der Netzfrequenz möglich. Diese Einschränkung entfällt praktisch.

- Eine Stützung der Netzfrequenz des Netzes 21 wird in einem weiten Netzfrequenzbereich möglich. Während bei starrer Frequenzkopplung eine Netzfrequenzstützung im Bereich von 5-6% der Netzfrequenz erzielt werden kann, lässt sich durch die elektronische Entkopplung oder Regelung des Frequenzverhältnisses des elektronischen variablen Getriebes eine Stützung im Bereich von deutlich mehr als 10% erreichen.

- Eine Anpassung der Betriebsoptima (Leistung, Wirkungsgrad) in Abhängigkeit von den Umgebungsbedingungen (z.B. der Eintrittstemperatur) ist möglich.

- Die Leistung kann erhöht werden.

- Der Wirkungsgrad kann verbessert werden

- Die Flexibilität bei Lastschwankungen und die Lebensdauer der Turbine können verbessert werden.

Die Turbine kann weiter drehzahlkonstant laufen. Bisher auftretende zusätzliche thermische oder mechanische Belastungen, welche durch Maßnahmen zur Drehzahlstützung notwendig waren, entfallen oder werden reduziert.

- Die Emissionswerte können verbessert werden. Der zusätzliche Freiheitsgrad einer variablen Drehzahl erlaubt eine gewünschte Leistung bei einer höheren oder niedrigeren Drehzahl anzufahren. Damit verbunden sind, im Fall einer Gasturbine als Antrieb, niedrigere oder höhere Turbineneintritts-Temperaturen mit dem Effekt der Beeinflussung der Emissionen von $CO_2$ und NOx. Insbesondere können erhöhte Emissionen im Fall der Frequenzstützung vermieden werden.

- Eine Frequenzentkopplung oder variable Frequenzverhältnisse erlauben den Bau von Kraftwerken, bei denen die Baugrösse für eine gewünschte Leistung minimiert werden kann, und zwar durch den zusätzlichen Freiheitsgrad, dass die Drehzahl netzfrequenzunabhängig eingestellt werden kann. (z.B. baut eine Turbine mit 3300 U/min deutlich kleiner als eine Turbine mit 3000 U/min). Dadurch lassen sich auch die Baukosten reduzieren.

- Eine Frequenzentkopplung oder variable Frequenzverhältnisse erlauben den Bau von Kraftwerken in Leistungsbereichen, welche mit vergleichbarer Antriebstechnologie bisher nicht erreicht werden können (z.B. ist bei einer Turbine mit 2400 U/min ein Leistungszuwachs gegenüber einer existierenden Turbine mit 3000 U/min von ca. 60% möglich).

Der Betrieb einer Gasturbine unabhängig von der Netzfrequenz bzw. Betriebsfrequenz des Verbrauchers ermöglicht die Optimierung des Designs weiter, da in herkömmlichen Gasturbinendesigns erhebliche Margen für den Off-Designbetrieb erforderlich sind. Die Hauptvorteile sind:

- Durch eine reduzierte mechanische Drehzahl $n_{mech}$ bei tiefen ambienten Temperaturen $T_{amb}$ ergibt sich ein niedriger Verdichterenddruck bei optimalem Komponentenwirkungsgrad und keine Verschiebung des Druckverlaufes (Druckverhältnisse) in Verdichter und Turbine:

  ◦ Die Gehäuseauslegung, der Kühlluftkühler und die externen Leitungen werden optimiert mit reduzierten Margen für extreme $T_{amb}$.
  ◦ Der maximale Brennstoffdruck wird reduziert. Entsprechend reduzieren sich die Designmargen für das Brennstoffverteilsystem FDS (Fuel Distribution System) und die Anforderungen an einen Verdichter für gasförmigen Brennstoff.

- Aus einer konstanten reduzierten Drehzahl folgen gleiche Geschwindigkeitsdreiecke an Verdichter- und Turbinenaustritt (bei Grundlast). Daraus resultieren besser auf Design optimierte Diffusoren.

- Es gibt keine Verschiebung des Druckaufbaus im Verdichter. Die Druckverhältnisse für die Kühlluftversorgung sind nicht mehr (oder in geringerem Masse) von der Umgebungstemperatur $T_{amb}$ abhängig. Es müssen keine Margen in den Kühlluftdruckverhältnissen für Variationen im $T_{amb}$ in das Kühlluftsystem eingebaut werden. Entsprechend kann auf Designbedingung optimiert werden, so dass sich ein besserer Wirkungsgrad und eine höhere Leistung der Gasturbine ergibt:

  ◦ Dies verbessert zusätzlich die Korrekturkurve über $T_{amb}$; insbesondere bei hohem $T_{amb}$ wird nicht unnötig viel Kühlluft verbraucht.

- Es ergibt sich eine kleinere Variation des Axialschubes über $T_{amb}$. Es reicht ein kleineres Axiallager aus. Dies führt zu Kostenersparnis und ausserdem geringerer Verlustleistung des Lagers (kleineres Schmierölsystem). Auch hieraus ergibt sich eine Verbesserung von Leistung und Wirkungsgrad.

Die vorrangige Möglichkeit, gemäss der Erfindung einen Turbinenstrang - Turbine und Generator - innerhalb einer Kraftwerksanlage unabhängig von der Netzfrequenz stabil bei einer gewünschten Drehzahl betreiben zu können, unterstützt die Stabilisierung von Stromnetzen. Bei Frequenzeinbrüchen muss das Kraftwerk in der Lage sein, die bei normaler Netzfrequenz abgegebene Leistung zu halten, Idealerweise sogar eine erhöhte Leistung an das Stromnetz abzugeben, Bisherige Kraftwerkssysteme können dies nur in einem begrenzten Mass sicherstellen. Die Netzfrequenzabsenkung spürt ein fest mit der Netzfrequenz gekoppeltes System als unerwünschte Drehzahlabsenkung auf der Turbine und dem Generator. Nach einer kurzen Phase, während derer aus dem Gasturbinen-Generator-Wellenstrang durch die Drehzahlverzögerung kinetische Energie in das Netz gespeist wird, sinkt die abgegebene Leistung. Ein Gasturbinensystem reagiert in diesem Fall mit einem reduzierten Ansaugmassenstrom und deutlich erhöhter Brennstoffzufuhr, was zu einer erhöhten Heissgas-Temperatur innerhalb der Turbine führt. Diese wiederum reduziert erheblich die Lebensdauer der Turbine, was die Betriebskosten der Anlage steigert. Der Schadstoffausstoss in Form von $NO_X$ erhöht sich in dieser Betriebsphase ebenfalls deutlich. Somit sind bereits zwei Grenzen definiert, die eine Leistungserhöhung bei Netzfrequenzabfall stark einschränken - Lebensdauer und Emissionen. Als dritter Aspekt spielt die mechanische und aerodynamische Verträglichkeit eine Rolle. Starke Frequenzabfälle über 6% führen zum Abschalten von Kraftwerksanlagen, da diese mechanisch nicht in der Lage sind, mit entsprechend reduzierten Drehzahlen betrieben werden zu können. Bei tiefer aerodynamischer Drehzahl

$$n^* = n_{mech} \frac{p}{\sqrt{\kappa T}} \ ,$$

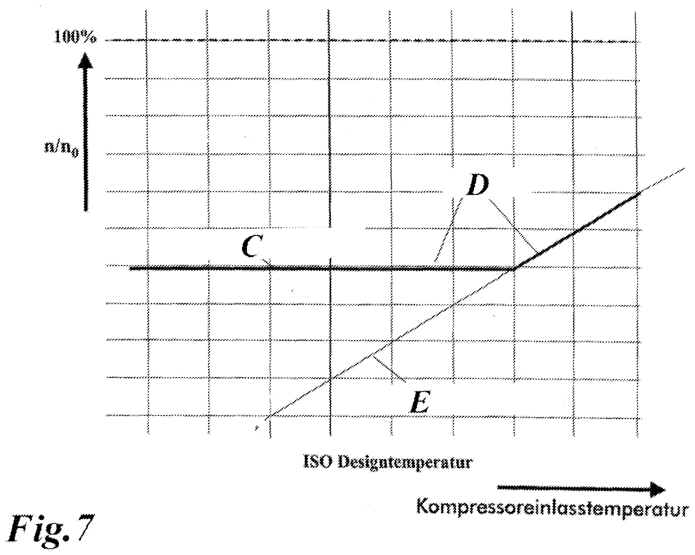

wird der Betrieb ferner durch die Pumpgrenze des Kompressors eingeschränkt (siehe Fig. 7; C = mechanisches Drehzahllimit, D = Lastabwurf und E = Kompressorpumpschutz).

Im Falle eines Netzfrequenz-entkoppelten Systems oder eines Systems mit regelbarem Frequenzverhältnis entfallen alle oben geschilderten Nachteile. Es gibt keine Einschränkung bezüglich minimal zulässiger Netzfrequenzen, da der Turbinenstrang nicht der Netzfrequenz folgen muss. Demzufolge treten auch keine Schadstofferhöhungen und Einbussen bei der Lebensdauer auf.

Neben der Netzstabilisierung erlaubt ein derartiges Kraftwerkssystem auch die Leistungs- oder Wirkungsgradoptimierung jedes Betriebspunkts, insbesondere auch bei Teillastbetriebspunkten. Durch eine betriebspunktabhängige geeignete Drehzahlregelung, im Rahmen der zulässigen mechanischen Grenzen, erreicht man entweder eine Emissions- und Brennstoffersparnis durch die Steigerung des Turbinenwirkungsgrades oder alternativ eine Leistungssteigerung, welche die Flexibilität eines Kraftwerks in Bezug auf die Abdeckung von Spitzenlasten steigert.

Ein weiterer positiver Aspekt eines Netzfrequenz-unabhängigen Kraftwerksystems ist die bessere Anpassungsfähigkeit einer Anlage an unterschiedliche Standortbedingungen. Die bereits erwähnte Netzstabilität ist ein wesentlicher Aspekt, der entscheidend vom Standort abhängt. Daneben sind es vor allem unterschiedliche Umgebungsbedingungen, wie Aussentemperaturen, Luftdruck, insbesondere der durch die Aufstellungshöhe bedingte Luftdruck, Luftfeuchtigkeit, auch Brennstoffzusammensetzung, welche den Betriebzustand eines Kraftwerks beeinflussen. Der zusätzliche Freiheitsgrad der unabhängigen Drehzahlregelung erlaubt es entsprechend den aktuellen Umgebungsbedingungen jeweils optimierte Betriebsbedingungen zu erzeugen. Dabei sind Wirkungsgradverbesserungen oder auch Leistungssteigerungen möglich.

Beispielsweise kann vereinfachend die mechanische Drehzahl umgekehrt proportional zur Verdichtereintrittstemperatur geregelt werden, um die aerodynamische Drehzahl der Gasturbine 12 konstant zu halten. Ist in der Regelung nicht die Abhängigkeit der aerodynamischen Drehzahl von dem Verdichtereintrittsdruck berücksichtigt, so kann eine Abweichung des mittleren ambienten Druckes, der von dem Standort des Kraftwerkes abhängt, von dem Designdruck der Gasturbine durch eine Korrektur einer mechanischen Referenzdrehzahl berücksichtig werden. Ausgehend von dieser korrigierten Referenzdrehzahl wird proportional zur Wurzel der Verdichtereintrittstemperatur $T_{k1}$ die Solldrehzahl der Gasturbine 12 geregelt

Selbst wenn der Druck bei der Berechnung der aerodynamischen Drehzahl berücksichtigt wird, kann eine Korrektur der Referenzdrehzahl vorteilhaft sein. Bei grosser Aufstellungshöhe des Kraftwerkes und entsprechend tiefem ambienten Druck kann es ohne Korrektur vorkommen, dass die Regelung 39 als Solldrehzahl 51 immer die maximal zulässige mechanische Drehzahl berechnet. Damit würden die meisten Vorteile, die man durch die Entkopplung von der Netzfrequenz oder variable Regelung des Frequenzverhältnisses gewinnt, wieder verloren gehen. Entsprechend ist es vorteilhaft eine Referenzdrehzahl zu wählen, die noch einen flexiblen Betrieb erlaubt.

Weiterhin kann beispielsweise eine Korrektur der Referenzdrehzahl abhängig vom verwendeten Brenngas vorteilhaft sein. Ausgehend von einem Gasturbinendesign, beispielsweise für ISO Methan, wird mit abnehmendem spezifischem Heizwert des Brenngases der Brenngasvolumenstrom zunehmen und damit der Brennkammerdruck und Verdichterenddruck steigen. Um dies zu kompensieren wird eine Reduktion der Referenzdrehzahl umgekehrt proportional zum Heizwert des Brenngases vorgeschlagen. Dies wird beispielsweise bei der Verbrennung von Synthesegasen relevant.

Das Wirkungsgradverbesserungspotential dieser neuen Technologie in Bezug auf einen Stromproduktionsstandort kann bei einer typischen Anwendung in der Grössenordnung von 3% (multiplikativ) bei der Turbine liegen. Leistungserhöhungen von deutlich mehr als 10% bezogen auf einen Stromproduktionsstandort sind denkbar. Netzfrequenzeinschränkungen werden unerheblich.

Alle oben aufgeführten Aspekte können bereits für bestehende Turbinen umgesetzt werden. Darüber hinaus eröffnen sich verschiedene Möglichkeiten, wie Gasturbinen optimiert werden können, sofern die Drehzahl der Gasturbine unlimitiert durch die Netzfrequenz ist.

Turbokomponenten, Verdichter und Turbine können mit neuen Randbedingungen ausgelegt werden. Bisher ist es auch bei stationären Gasturbinen nötig, einen minimalen Arbeitsbereich von ca. +/-10% reduzierter Drehzahl als Sicherheitsfenster zu berücksichtigen. Damit wird sichergestellt, dass die Gasturbine zum einen mechanische Drehzahlschwankungen, die bedingt sind durch Netzfrequenzschwankungen, ertragen kann. Zum anderen können Änderungen der Eintrittstemperatur, welche im Verhältnis $1/(T_{Eintritt})^{1/2}$ in die reduzierte Drehzahl eingehen, abgedeckt werden. Schränkt man durch ein optimiertes Fahrkonzept den benötigten reduzierten Drehzahlbereich ein, kann durch eine Neuauslegung der Verdichter- und Turbinenbeschaufelung sowohl ein Wirkungsgrad- als auch ein Leistungsgewinn erreicht werden.

Eine weitere Alternative, die Flexibilität gegenüber der Netzfrequenz zu nutzen, liegt in der Möglichkeit, Turbinen und Generatoren in Drehzahlbereichen zu entwickeln, welche bislang nicht realisierbar waren. So können durch Absenken der Drehzahl gegenüber der Netzfrequenz, z.B. auf 45Hz, grössere Kraftwerkseinheiten realisiert werden.

In dem Drehzahlbereich, wo Turbinen nicht mehr mit Getrieben ausgestattet werden können, der aber noch über der Netzfrequenz liegt, ergibt sich die Möglichkeit, kompaktere und damit kostengünstigere Gasturbinen zu bauen, sofern die Leistung unter der Grenzleistung bei der gegebenen Netzfrequenz liegt. Der Generator hat ebenfalls den Vorteil, durch höhere Drehzahl kompakter gebaut werden zu können.

Als letzte Option im Bereich heutiger Turbinen mit Getrieben ergibt sich die Möglichkeit, auf das Getriebe zu verzichten und den Generator für die Turbinendrehzahl auszulegen. Der Generator wird auch in diesem Fall kleiner und günstiger.

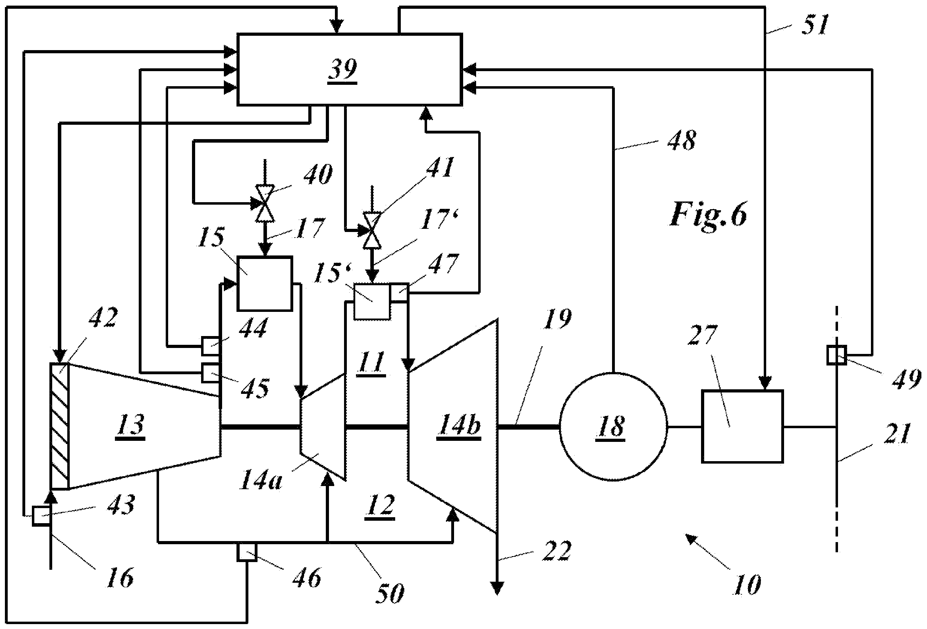

In Fig. 6 ist ein vereinfachtes Schema einer Kraftwerksanlage 10 wiedergegeben, das für ein Betriebsverfahren gemäss der Erfindung ausgelegt ist. Der Turbinenstrang 11 mit der Gasturbine 12 und dem Generator 18 entsprechen denen in Fig. 4. Dies gilt auch für das variable elektronische Getriebe oder die elektronische Entkopplungsvorrichtung 27 und das angeschlossene Netz 21. Das Netz 21 kann ein allgemeines Versorgungsnetz, aber auch ein Bahnstromnetz sein. Anstelle des Netzes 21 kann auch ein Verbraucher, z.B. ein industrieller Antrieb oder ein Verdichter für eine Erdgasverflüssigungsanlage angeschlossen sein. Auf die Darstellung einer möglichen zusätzlichen Dampfturbine mit entsprechendem Wasser/Dampf-Kreislauf ist hier aus Platzgründen verzichtet worden.

Zur Steuerung oder Regelung der Gasturbine 12 dienen mindestens eine Reihe verstellbarer Verdichterleitschaufeln 42 am Eingang des Verdichters 13 sowie Regelventile 40 und 41 in der Brennstoffzufuhr 17 bzw. 17' zu den Brennkammern 15, 15'. Die entsprechenden Steuersignale kommen aus einer Steuerung oder Regelung 39 nach Massgabe bestimmter Eingangsparameter, die einzeln oder in wählbarer Kombination verwendet werden können. Ein möglicher Parameter ist Verdichtereintrittstemperatur, die mit einem am Lufteinlass 16 angeordneten ersten Messwertaufnehmer 43 gemessen wird. Andere mögliche Parameter sind die Verdichterendtemperatur und der Verdichterenddruck, die mit einem zweiten und dritten Messwertaufnehmer 44 bzw. 45 am Ausgang des Verdichters gemessen werden. Ein weiterer Messwertaufnehmer 46, der an einer Kühlluftversorgung 50 vom Verdichter 13 zu thermisch belasteten Bauteilen der Gasturbine 12, z.B. in den beiden Turbinen 14a und 14b, angeordnet ist, misst den Druck und/oder die Temperatur und/oder die Durchflussmenge der Kühlluft. Ein weiterer Messwertaufnehmer 47 kann an der zweiten Brennkammer 15' angeordnet sein, um den Druck in dieser Brennkammer zu messen. Die Drehzahl der Gasturbine 12 kann beispielsweise am Generator 18 abgenommen und über eine Messleitung 48 in die Regelung 39 eingegeben werden. Für die Messung der Netzfrequenz im Netz 21 kann ein Netzfrequenzaufnehmer 49 vorgesehen werden. Schliesslich kann in die Regelung 39 ein Wert für eine Zielleistung ZL eingegeben werden.

Die Regelung 39 regelt bei elektronischer Entkopplung vom Netz die aerodynamische oder mechanische Drehzahl $n_{mech}$ der Gasturbine 12 und des Generators nach einem oder mehreren dieser Parameter, ohne dass die Drehzahl in anderer Weise von der Netzfrequenz F des Netzes 21 beeinflusst wird.

Die Regelung der Drehzahl kann alternativ beispielsweise auch dadurch erfolgen, dass die in der Regelung 39 der Gasturbine berechnete Solldrehzahl 51 an den Regler 31 des variablen elektronischen Getriebe 27 übertragen wird und die Solldrehzahl 51 über den Generator auf die Gasturbine 12 aufgezwungen wird. Der Generator 18 stützt sich dabei über das variable elektronische Getriebe 27 gegen das im Vergleich zur Gasturbine 12 quasi statische Netz 21 ab und zwingt durch die Regelung des Frequenzverhältnisses zwischen Netz F und mechanischer Drehzahl $n_{mech}$ der Gasturbine die Solldrehzahl 51 auf. Quasi statisches Netz 21 bedeutet in diesem Zusammenhang, dass Änderungen der Netzfrequenz F infolge einer Änderungen der Drehzahl $n_{mech}$ oder der von der betreffenden Gasturbine 12 an das Netz 21 abgegeben Leistung sehr klein sind und bei dem Regelvorgang vernachlässigbar sind bzw. leicht kompensiert werden können. Dies heisst insbesondere das bei einer Anpassung der aufgezwungenen Gasturbinedrehzahl eine eventuell resultierende Änderung der Netzfrequenz F eine Grössenordnung kleiner ist. In der Regel wird die resultierende Änderung der Netzfrequenz F im Rauschen des Netzes nicht messbar sein.

Fig. 7 zeigt vereinfacht die herkömmlich zu beachtende normalisierte Mindestdrehzahl einer Gasturbine 12 über die Kompressoreintrittstemperatur $T_{k1}$, gegen dessen Unterschreitung die Gasturbine 12 durch einen Lastabwurf D geschützt ist. Sie setzt sich aus einem mechanischen Drehzahllimit C und einem Kompressorpumpschutz E zusammen.

Eine weitere Verbesserung der Flexibilität und des Betriebsbereiches einer Gasturbine lässt sich im Rahmen der Erfindung dadurch erreichen, dass der absolute Drehzahlbereich in dem die Gasturbine 12 stationär am Netz 21 betrieben werden kann zu tiefen Drehzahlen $n_{mech}$ deutlich erweitert werden kann. Für den stationären Betrieb ist bei herkömmlichen Gasturbinen 12 die mechanische Drehzahl $n_{mech}$ nach unten durch die Anregung von Eigenfrequenzen beschränkt. Dieses können beispielsweise Eigenfrequenzen von Schaufeln sein. Drehzahlbereiche, in denen Eigenfrequenzen angeregt werden, können nur transient durchfahren werden. Dies geschieht beim Hochfahren oder Abstellen der Gasturbine 12, solange diese nicht mit dem Netz 21 synchronisiert ist. Um Drehzahlen $n_{mech}$, die zur Anregung von Eigenfrequenzen führen können, liegt ein Sperrbereich, in dem die Gasturbine 12 nicht stationär betrieben werden kann. Der oberste Sperrbereich unterhalb der Betriebsfrequenz der Gasturbine 12 begründet herkömmlich das mechanische Drehzahllimit C. Die vorgeschlagene, von der Netzfrequenz gelöste Regelung der Gasturbinendrehzahl erlaubt es, auch während der Leistungsabgabe der Gasturbine an das Netz transient durch Sperrbereiche zu fahren und die Gasturbine bei einer Drehzahl $n_{mech}$ unterhalb eines Sperrbereiches zu betreiben. Bei dem Betrieb mit einer elektronischen Entkopplungsvorrichtung oder einem variablen elektronischen Getriebe 27 ist zu beachten, dass von der elektronischen Vorrichtung bei bestimmten Frequenzen über den Generator 18 Anregungen auf den Wellenstrang ausgeübt werden können. Falls diese zu kritischen Eigenschwingungen in der Welle 19, Schaufeln oder anderen Komponenten des Wellenstranges führen, sind auch diese Frequenzen zu vermeiden. Die Sperrbereiche können in die Regelung der Gasturbine 39 mit aufgenommen werden. Da diese Anregungen von der elektronischen Vorrichtung abhängen, sind in einer Ausführung die Sperrbereiche in dem Regler 31 des variablen elektronischen Getriebes 27 gespeichert. Wenn die Solldrehzahl 51 in einen solchen Sperrbereich fällt, wird diese im Regler 31 auf den nächst höheren oder nächst kleineren Wert unter, bzw. oberhalb des Sperrbereiches korrigiert und entsprechend des korrigierten Wertes das variable elektronische Getriebe geregelt.

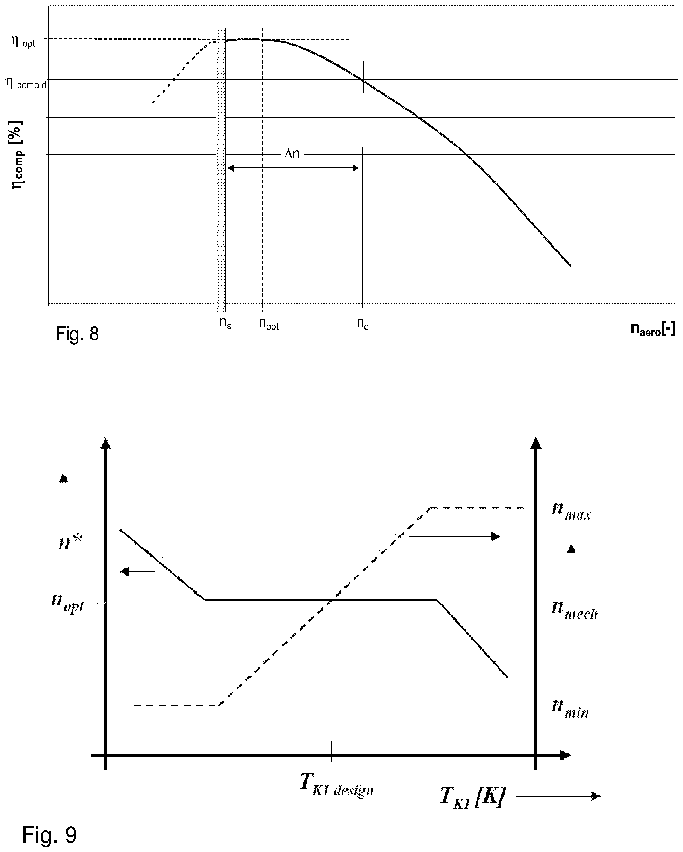

Die zu beachtenden Drehzahllimite, wie sie am Beispiel des Lastabwurfes als Kompressorpumpschutz E bei Unterdrehzahl in Fig. 7 vereinfacht dargestellt sind, sind ein Kompromiss aus zwei gegensätzlichen Vorderrungen: Zum einen soll der Betriebsbereich der Gasturbine 12 möglichst wenig eingeschränkt werden, zum anderen soll der Kompressor möglichst nahe der Pumpgrenze gefahren werden, weil dort sein Wirkungsgrad am höchsten ist. Der Einfluss des Abstandes $\Delta n$ zur Pumpgrenze $n_s$ auf den während des Betriebs realisierten Verdichterwirkungsgrad $\eta_{comp}$ ist in Fig. 8 schematisch dargestellt. Der höchste Verdichterwirkungsgrad $\eta_{opt}$ wird bei einer optimalen aerodynamischen Drehzahl $n_{opt}$ leicht oberhalb der Pumpgrenze $n_s$ erreicht. Bei dieser Drehzahl wird eine herkömmliche Gasturbine 12 bei Auslegungsbedingungen nicht betrieben, da der Abstand $\Delta n_{mech}$ zur Pumpgrenze $n_s$ eingehalten werden muss. Dies führt zu einem tieferen Verdichterdesignwirkungsgrad $\eta_{comp\,d}$ bei der Designdrehzahl $n_d$.

Bei einer Neuauslegung für eine Gasturbine 12 mit regelbarer Drehzahl kann der Verdichter mit kleinerem Abstande $\Delta n$ zur Pumpgrenze $n_s$ optimiert werden und für den Betrieb näher an oder bei der optimalen Drehzahl $n_{opt}$ ausgelegt werden, da Änderungen der aerodynamischen Drehzahl infolge von Änderungen der Verdichtereintrittstemperatur durch Regelung der mechanischen Drehzahl $n_{mech}$ ausgeglichen werdend können. Ausserdem kann die Marge für Änderungen der Netzfrequenz F reduziert werden oder ganz fallen gelassen werden. Damit wird der Wirkungsgrad des Kompressors 13 und schliesslich des gesamten Kraftwerkes verbessert.

Eine Regelung 39, in der die mechanische Drehzahl $n_{mech}$ als Funktion der Verdichtereintrittstemperatur $T_{K1}$ geregelt wird, ist in Fig. 9 gezeigt. Die mechanische Drehzahl $n_{mech}$ wird proportional zur Verdichtereintrittstemperatur $T_{K1}$ angehoben, um die aerodynamische Drehzahl

$$n^* = n_{mech}\,\frac{p}{\sqrt{T_{k1}}},$$

konstant zu halten. Es ist weiter denkbar, dass die mechanische Drehzahl $n_{mech}$ auf einen konstanten Wert geregelt wird oder nachgeregelt wird, sobald mechanische oder andere Grenzwerte wie z.B. Drücke oder Temperaturen erreicht werden. Konkret wird ausgehend von der Designtemperatur $T_{K1d}$, bei der mit einer mechanischen Drehzahl $n_{mech}$ die optimale aerodynamische Drehzahl $n_{opt}$ erreicht ist, die mechanische Drehzahl $n_{mech}$ mit steigender Verdichtereintrittstemperatur $T_{k1}$ angehoben, bis das obere Limit in der mechanischen Drehzahl $n_{max}$ erreicht wird. Analog wird mit sinkender Verdichtereintrittstemperatur $T_{k1}$ die mechanische Drehzahl $n_{mech}$ reduziert, bis das untere Limit in der mechanischen Drehzahl $n_{min}$ erreicht wird. Ab Erreichen der mechanischen Limite wird in diesem Beispiel die mechanische Drehzahl $n_{mech}$ konstant gehalten.

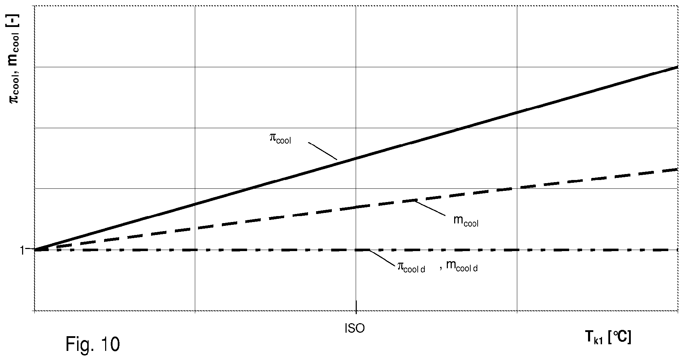

In Fig. 10 ist als Beispiel schematisch der Verlauf des normierten Kühlluftdruckverhältnisses $\pi_{cool}$ und des normierten Kühlluftmassenstromes $m_{cool}$ über Verdichtereintrittstemperatur $T_{k1}$ für ein Kühlluftsystem der Gasturbine 12 gezeigt, das mit Kühlluft 50 aus dem Mittelteil des Verdichters versorgt wird. Im Gegensatz zu Kühlluft, die vom Verdichterende entnommen wird, welche zwangsläufig immer mit Verdichteraustrittsdruck zur Verfügung steht, ist bei Kühlluftentnahme aus dem Verdichter nicht für alle Betriebszustände ein konstantes Druckverhältnis gewährleistet, da sich der Druckaufbau im Verdichter je nach Betriebsbedingungen verschiebt. Dies wird bei der Auslegung des Kühlluftsystems berücksichtigt, so dass im gesamten Auslegungsbereich die mindest erforderliche Kühlluftmenge $m_{cool\,d}$ bei den mindest erforderlichen Kühlluftdruckverhältnissen $\pi_{cool}$ zur Verfügung steht.

Bei herkömmlichen Gasturbinen steigt mit der Verdichtereintrittstemperatur $T_{k1}$ das normierte Kühlluftdruckverhältnis $\pi_{cool}$ und der normierte Kühlluftmassenstrome $m_{cool}$. Dies führt schon bei ISO Bedingungen zu erhöhtem Kühlluftverbrauch $m_{cool}$ der mit der Verdichtereintrittstemperatur weiter steigt und zu Leistungs- und Wirkungsgradeinbussen führt. Mit einer Anhebung der mechanischen Drehzahl $n_{mech}$ können das normierte Kühlluftdruckverhältnis $\pi_{cool}$ und der resultierende normierte Kühlluftmassenstrom $m_{cool}$ reduziert werden. Analog kann durch ein Absenken der mechanischen Drehzahl $n_{mech}$ das normierte Kühlluftdruckverhältnis $\pi_{cool}$ und resultierend der normierte Kühlluftmassenstrom $m_{cool}$ angehoben werden. Entsprechend können durch Drehzahlregelung die Kühlluftverhältnisse unabhängig von der Verdichtereintrittstemperatur auf Designbedingungen geregelt werden und so auf dem Designwert gehalten werden.

BEZUGSZEICHENLISTE

| | |
|---|---|
| 10,10',10" | Kraftwerksanlage |
| 11,11' | Turbinenstrang |
| 12 | Gasturbine |
| 13 | Verdichter |
| 14,14a,b | Turbine |
| 15,15' | Brennkammer |
| 16 | Lufteinlass |
| 17,17' | Brennstoffzufuhr |
| 18 | Generator |
| 19 | Welle |
| 20 | Netzverbindung (frequenzgekoppelt) |
| 21 | Netz |
| 22 | Abgasauslass |
| 23 | Abhitzedampferzeuger |
| 24 | Dampfturbine |
| 25 | Wasser-Dampf-Kreislauf |
| 26 | Getriebe (mechanisch) |
| 27 | Entkopplungsvorrichtung oder variables elektronisches Getriebe |
| 28 | Taktgeber |
| 29 | Leistungsteil |
| 30 | Last |
| 31 | Regler |
| 32 | Schalter (bidirektional) |
| 33 | Spannungsmesseinrichtung |
| 34 | Strommesseinrichtung |
| 35 | Steuerleitung |
| 36,..,38 | Signalleitung |
| 39 | Regelung |
| 40,41 | Regelventil |
| 42 | verstellbare Verdichterleitschaufeln |
| 43,..,47 | Messwertaufnehmer |
| 48 | Messleitung (Drehzahl) |
| 49 | Netzfrequenzaufnehmer |
| 50 | Kühlluftversorgung |
| 51 | Generatorsolldrehzahl |
| G1,..,G6 | Phase (Generator) |
| L1,..,L3 | Phase (Last) |
| f | Frequenz (Drehzahl) |
| P | Leistung |
| A, B | Kurve |
| ZL | Zielleistung |
| $T_{k1}$ | Verdichtereintrittstemperatur |
| $T_{k1d}$ | Verdichtereintrittstemperatur bei Auslegungsbedingungen |
| n* | aerodynamische Drehzahl |
| $n_{mech}$ | mechanische Drehzahl |
| $n_{mech\,d}$ | mechanische Drehzahl bei Auslegungsbedingungen |
| $n_{min}$ | minimal zulässige mechanische Drehzahl |
| $n_{max}$ | maximal zulässige mechanische Drehzahl |
| $n_d$ | herkömmliche Verdichterdesigndrehzahl (aerodynamisch) |
| $n_{opt}$ | optimale Verdichterdrehzahl (aerodynamisch) |
| $m_{cool}$ | normierter Kühlluftverbrauch |
| $m_{coold\,d}$ | normierter Kühlluftverbrauch bei Auslegungsbedingung |
| $\pi_{cool}$ | normiertes Kühlluftdruckverhältnis |
| $\pi_{cool\,d}$ | normiertes Kühlluftdruckverhältnis bei Auslegungsbedingung |
| $\eta_{comp}$ | Verdichterwirkungsgrad |
| $\eta_{comp\,d}$ | Verdichterwirkungsgrad bei Auslegungsbedingung (herkömmliches Design) |
| $\eta_{opt}$ | optimaler Verdichterwirkungsgrad |
| $\Delta n$ | Abstandes zur Pumpgrenze des Verdichters |

**Patentansprüche**

1. Kraftwerksanlage (10) mit einem Turbinenstrang (11) aus einer Gasturbine (12) und einem von der Gasturbine (12) direkt angetriebenen, Wechselstrom mit einer Betriebsfrequenz erzeugenden Generator (18), dessen Ausgang mit einem Netz (21) mit gegebener Netzfrequenz (F) in Verbindung steht, wobei zwischen dem Generator (18) und dem Netz (21) ein variables elektronisches Getriebe (27) angeordnet ist, **dadurch gekennzeichnet, dass** das variable elektronische Getriebe (27) der Gasturbine (12) mit einem Übersetzungsverhältnis (X) zwischen mechanischer Drehzahl ($n_{mech}$) und Netzfrequenz (F) über den Generator (18) eine Drehzahl aufzwingt.

2. Kraftwerksanlage nach Anspruch 1, **dadurch gekennzeichnet, dass** das Übersetzungsverhältnis (X) regelbar ist.

3. Kraftwerksanlage nach Anspruch 1, **dadurch gekennzeichnet, dass** das Übersetzungsverhältnis (X) um einen Auslegungswert von 60 Hz zu 50 Hz regelbar ist oder dass das Übersetzungsverhältnis (X) um einen Auslegungswert von 50 Hz zu 60 Hz regelbar ist.

4. Kraftwerksanlage nach einem der Ansprüche 1 bis 3, **dadurch gekennzeichnet, dass** das variable elektronisches Getriebe (27) ein Matrixumformer ist.

5. Kraftwerksanlage nach Anspruch 4, **dadurch gekennzeichnet, dass** der Matrixumrichter eine Mehrzahl von in einer (m x n)-Matrix angeordneten, steuerbaren bidirektionalen Schaltern (32) umfasst, welche von einem Regler (31) gesteuert m Eingänge wahlweise mit n Ausgängen verbinden, wobei m grösser n ist, und wobei erste Mittel (34) zur Bestimmung der Vorzeichen der Ströme in den Eingängen und zweite Mittel (33) zur Bestimmung der Vorzeichen der Spannungen zwischen den Eingängen vorgesehen sind, und wobei die ersten und zweiten Mittel (34 bzw. 33) mit dem Regler (31) durch Signalleitungen (38) verbunden sind.

6. Verfahren zum Betrieb einer Kraftwerksanlage (10) nach einem der Ansprüche 1 bis 5, **dadurch gekennzeichnet, dass** die mechanische oder aerodynamische Drehzahl der Gasturbine (12) über das Übersetzungsverhältnis (X) zwischen mechanischer Drehzahl ($n_{mech}$) und Netzfrequenz (F) geregelt wird.

7. Verfahren nach Anspruch 6, **dadurch gekennzeichnet, dass** die mechanische oder aerodynamische Drehzahl der Gasturbine (12) auf einen konstanten Wert geregelt wird.

8. Verfahren nach Anspruch 6, **dadurch gekennzeichnet, dass** die mechanische oder aerodynamische Drehzahl der Gasturbine (12) als Funktion eines oder mehrerer Parameter(s) der Kraftwerksanlage (10) geregelt wird.

9. Verfahren nach Anspruch 8, **dadurch gekennzeichnet, dass** die Gasturbine (12) einen Verdichter (13) zur Verdichtung der Verbrennungsluft umfasst, dass der Enddruck des Verdichters (13) gemessen wird, und dass die mechanische oder aerodynamische Drehzahl der Gasturbine (12) als Funktion des Verdichterenddrucks geregelt wird und/ oder dass die Endtemperatur des Verdichters (13) gemessen wird, und dass die mechanische oder aerodynamische Drehzahl der Gasturbine (12) als Funktion der Verdichterendtemperatur geregelt wird.

10. Verfahren nach Anspruch 8, **dadurch gekennzeichnet, dass** für den Betrieb der Gasturbine (12) eine Zielleistung (ZL) vorgegeben wird, und dass die mechanische oder aerodynamische Drehzahl der Gasturbine (12) als Funktion der Zielleistung (ZL) geregelt wird.

11. Verfahren nach Anspruch 8, **dadurch gekennzeichnet, dass** die Netzfrequenz des Netzes (21) bzw. die zweite Betriebsfrequenz gemessen wird, und dass die mechanische oder aerodynamische Drehzahl der Gasturbine (12) als Funktion der Netzfrequenz bzw. zweiten Betriebsfrequenz geregelt wird.

12. Verfahren nach Anspruch 8, **dadurch gekennzeichnet, dass** die Gasturbine (12) einen Verdichter (13) zur Verdichtung der Verbrennungsluft umfasst, dass zur Kühlung von Komponenten der Gasturbine (12) dem Verdichter (13) Kühlluft entnommen wird, und dass die mechanische oder aerodynamische Drehzahl der Gasturbine (12) als Funktion der Kühllufteinspeisebedingungen, insbesondere als Funktion von Druck und/oder Temperatur und/oder Menge der Kühlluft, geregelt wird.

13. Verfahren nach Anspruch 8, **dadurch gekennzeichnet, dass** die mechanische oder aerodynamische Drehzahl der Gasturbine (12) als Funktion der zulässigen Bauteiltemperatur von ausgewählten Bauteilen der Gasturbine oder als Funktion der zulässigen Emissionen geregelt wird.

14. Verfahren nach Anspruch 8, **dadurch gekennzeichnet, dass** die mechanische Drehzahl ($n_{mech}$) proportional zur Wurzel der Verdichtereintrittstemperatur $T_{K1}$ und/ oder zum Verdichtereintrittsdruck geregelt wird, um die aerodynamische Drehzahl (n*) der Gasturbine (12) im zulässigen mechanischen Drehzahlbereich auf einen konstanten Wert zu halten, und dass die mechanische Drehzahl auf einen konstanten Wert geregelt wird, sobald mechanische oder andere Grenzwerte wie z.B. Drücke oder Temperaturen erreicht werden.

15. Verfahren nach einem der Ansprüche 6 bis 14, **dadurch gekennzeichnet, dass** in dem Fall, dass die Drehzahl ($n_{mech}$) des Wellenstranges und/ oder des Wellenstranges in Kombination mit dem variablen elektronischen Getriebe (27) und/ oder des Wellenstranges in Kombination mit der elektronischen Entkopplungsvorrichtung (27) in einen Sperrbereich fällt, die Solldrehzahl (51) oder das Übersetzungsverhältnis des variablen elektronischen Getriebes (27) auf einen Wert ausserhalb des jeweiligen Sperrbereiches korrigiert wird.

## Claims

1. Power station (10) having a turbine section (11) comprising a gas turbine (12) and a generator (18) which is driven directly by the gas turbine (12), produces alternating current at an operating frequency and whose output is connected to a grid system (21) with a given grid system frequency (F), wherein a variable electronic gearbox (27) is arranged between the generator (18) and the grid system (21), **characterized in that** the variable electronic gearbox (27) of the gas turbine (12) imposes a rotation speed with a conversion ratio (X) between the mechanical rotation speed ($n_{mech}$) and the grid system frequency (F) via the generator (18).

2. Power station according to Claim 1, **characterized in that** the conversion ratio (X) is controllable.

3. Power station according to Claim 1, **characterized in that** the conversion ratio (X) is controllable by a design value from 60 Hz to 50 Hz or **in that** the conversion ratio (X) is controllable by a design value from 50 Hz to 60 Hz.

4.  Power station according to one of Claims 1 to 3, **characterized in that** the variable electronic gearbox (27) is a matrix converter.

5.  Power station according to Claim 4, **characterized in that** the matrix converter comprises a plurality of controllable bidirectional switches (32) which are arranged in an (m × n) matrix and, controlled by a regulator (31), connect m inputs selectively to n outputs, where m is greater than n, and where first means (34) are provided for determining the mathematical signs of the currents in the inputs, and second means (33) are provided for determining the mathematical signs of the voltages between the inputs, and where the first and second means (34 and 33 respectively) are connected to the regulator (31) by signal lines (38).

6.  Method for operation of a power station (10) according to one of Claims 1 to 5, **characterized in that** the mechanical or aerodynamic rotation speed of the gas turbine (12) is regulated via the conversion ratio (X) between the mechanical rotation speed ($n_{mech}$) and the grid system frequency (F).

7.  Method according to Claim 6, **characterized in that** the mechanical or aerodynamic rotation speed of the gas turbine (12) is regulated at a constant value.

8.  Method according to Claim 6, **characterized in that** the mechanical or aerodynamic rotation speed of the gas turbine (12) is controlled as a function of one or more parameter or parameters of the power station (10).

9.  Method according to Claim 8, **characterized in that** the gas turbine (12) has a compressor (13) for compression of the combustion air, **in that** the outlet pressure of the compressor (13) is measured, and **in that** the mechanical or aerodynamic rotation speed of the gas turbine (12) is controlled as a function of the compressor outlet pressure and/or **in that** the outlet temperature of the compressor (13) is measured, and **in that** the mechanical or aerodynamic rotation speed of the gas turbine (12) is controlled as a function of the compressor outlet temperature.

10. Method according to Claim 8, **characterized in that** an intended power (ZL) is predetermined for operation of the gas turbine (12) and **in that** the mechanical or aerodynamic rotation speed of the gas turbine (12) is controlled as a function of the intended power (ZL).

11. Method according to Claim 8, **characterized in that** the grid system frequency of the grid system (21) and/or the second operating frequency is measured, and **in that** the mechanical or aerodynamic rotation speed of the gas turbine (12) is controlled as a function of the grid system frequency and/or the second operating frequency.

12. Method according to Claim 8, **characterized in that** the gas turbine (12) has a compressor (13) for compression of the combustion air, **in that** cooling air is taken from the compressor (13) in order to cool components of the gas turbine (12), and **in that** the mechanical or aerodynamic rotation speed of the gas turbine (12) is controlled as a function of the cooling air feed conditions, in particular as a function of the pressure and/or temperature and/or amount of cooling air.

13. Method according to Claim 8, **characterized in that** the mechanical or aerodynamic rotation speed of the gas turbine (12) is controlled as a function of the permissible component temperature of selected components of the gas turbine, or as a function of the permissible emissions.

14. Method according to Claim 8, **characterized in that** the mechanical rotation speed ($n_{mech}$) is controlled in proportion to the square root of the compressor inlet temperature $T_{K1}$ and/or in proportion to the compressor inlet pressure, in order to keep the aerodynamic rotation speed (n*) of the gas turbine (12) at a constant value in the permissible mechanical rotation speed range, and **in that** the mechanical rotation speed is regulated at a constant value as soon as mechanical or other limit values such as pressures or temperatures are reached.

15. Method according to one of Claims 6 to 14, **characterized in that**, in the situation in which the rotation speed ($n_{mech}$) of the shaft section and/or of the shaft section in combination with the variable electronic gearbox (27) and/or of the shaft section in combination with the electronic decoupling apparatus (27) falls in a blocking range, the set rotation speed (51) or the conversion ratio of the variable electronic gearbox (27) is corrected to a value outside the respective blocking range.

**Revendications**

1.  Installation de centrale électrique (10) avec une ligne de turbine (11) composée d'une turbine à gaz (12) et d'un générateur (18) entraîné directement par la turbine à gaz (12) et produisant un courant alternatif avec une fréquence de fonctionnement, dont la sortie est en liaison avec un réseau (21) ayant une fréquence de réseau donnée (F), dans lequel une transmission électronique variable (27) est disposée entre le générateur (18) et le réseau (21), **caractérisée en ce que** la transmission électronique variable (27) de la turbine à gaz (12) avec un rapport de transmission (X) entre le nombre de tours mécanique ($n_{mech}$) et la fréquence de réseau (F) impose un nombre de tours au générateur (18).

2. Installation de centrale électrique selon la revendication 1, **caractérisée en ce que** le rapport de transmission (X) est réglable.

3. Installation de centrale électrique selon la revendication 1, **caractérisée en ce que** le rapport de transmission (X) est réglable d'une valeur de conception de 60 Hz à 50 Hz ou **en ce que** le rapport de transmission (X) est réglable d'une valeur de conception de 50 Hz à 60 Hz.

4. Installation de centrale électrique selon l'une quelconque des revendications 1 à 3, **caractérisée en ce que** la transmission électronique variable (27) est un convertisseur matriciel.

5. Installation de centrale électrique selon la revendication 4, **caractérisée en ce que** le convertisseur matriciel comprend une multiplicité de commutateurs bidirectionnels (32) pouvant être commandés disposés en une matrice (m x n), qui relient sous la commande d'un régulateur (31) m entrées au choix à n sorties, dans laquelle m est plus grand que n, et dans laquelle il est prévu des premiers moyens (34) pour la détermination des signes des courants dans les entrées et des seconds moyens (33) pour la détermination des signes des tensions entre les entrées, et dans laquelle les premiers et les seconds moyens (34 ou 33) sont reliés au régulateur (31) par des lignes de signalisation (38).

6. Procédé de fonctionnement d'une installation de centrale électrique (10) selon l'une quelconque des revendications 1 à 5, **caractérisé en ce que** l'on règle le nombre de tours mécanique ou aérodynamique de la turbine à gaz (12) par l'intermédiaire du rapport de transmission (X) entre le nombre de tours mécanique ($n_{mech}$) et la fréquence de réseau (F).

7. Procédé selon la revendication 6, **caractérisé en ce que** l'on règle le nombre de tours mécanique ou aérodynamique de la turbine à gaz (12) à une valeur constante.

8. Procédé selon la revendication 6, **caractérisé en ce que** l'on règle le nombre de tours mécanique ou aérodynamique de la turbine à gaz (12) en fonction d'un ou de plusieurs paramètre(s) de l'installation de centrale électrique (10).

9. Procédé selon la revendication 8, **caractérisé en ce que** la turbine à gaz (12) comprend un compresseur (13) pour la compression de l'air de combustion, **en ce que** l'on mesure la pression finale du compresseur (13), et **en ce que** l'on règle le nombre de tours mécanique ou aérodynamique de la turbine (12) en fonction de la pression finale du compresseur et/ou **en ce que** l'on mesure la température finale du compresseur (13) et **en ce que** l'on règle le nombre de tours mécanique ou aérodynamique de la turbine à gaz (12) en fonction de la température finale du compresseur.

10. Procédé selon la revendication 8, **caractérisé en ce que** l'on prédétermine une puissance cible (ZL) pour le fonctionnement de la turbine à gaz (12), et **en ce que** l'on règle le nombre de tours mécanique ou aérodynamique de la turbine à gaz (12) en fonction de la puissance cible (ZL).

11. Procédé selon la revendication 8, **caractérisé en ce que** l'on mesure la fréquence de réseau du réseau (21) ou la seconde fréquence de fonctionnement, et **en ce que** l'on règle le nombre de tours mécanique ou aérodynamique de la turbine à gaz (12) en fonction de la fréquence de réseau ou de la seconde fréquence de fonctionnement.

12. Procédé selon la revendication 8, **caractérisé en ce que** la turbine à gaz (12) comprend un compresseur (13) pour la compression de l'air de combustion, **en ce que** l'on prélève de l'air de refroidissement au compresseur (13) pour le refroidissement de composants de la turbine à gaz (12), et **en ce que** l'on règle le nombre de tours mécanique ou aérodynamique de la turbine à gaz (12) en fonction des conditions de fourniture d'air de refroidissement, en particulier en fonction de la pression et/ou de la température et/ou du débit de l'air de refroidissement.

13. Procédé selon la revendication 8, **caractérisé en ce que** l'on règle le nombre de tours mécanique ou aérodynamique de la turbine à gaz (12) en fonction de la température de composant admissible parmi des composants sélectionnés de la turbine à gaz ou en fonction des émissions admissibles.

14. Procédé selon la revendication 8, **caractérisé en ce que** l'on règle le nombre de tours mécanique ($n_{mech}$) proportionnellement à la racine carrée de la température d'entrée du compresseur $T_{K1}$ et/ou à la pression d'entrée du compresseur, afin de maintenir le nombre de tours aérodynamique ($n^*$) de la turbine à gaz (12) dans la plage admissible du nombre de tours mécanique à une valeur constante, dès que des valeurs limites mécaniques ou autres telles que des pressions ou des températures sont atteintes.

15. Procédé selon l'une quelconque des revendications 6 à 14, **caractérisé en ce que**, dans le cas où le nombre de tours ($n_{mech}$) de la ligne d'arbre et/ou de la ligne d'arbre en combinaison avec la transmission électronique variable (27) et/ou de la ligne d'arbre en combinaison avec le dispositif de débrayage électronique (27) tombe dans une plage d'arrêt, on corrige le nombre de tours de consigne (51) ou le rapport de transmission de la transmission électronique variable (27) à une valeur située à l'extérieur de la plage d'arrêt respective.

Fig.1

Fig.2

Fig.3

*Fig.4*

EP 2 122 129 B1

*Fig.5*

EP 2 122 129 B1

Fig.6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5520512 A
- US 6628005 B2
- US 5694026 A
- US 6979914 B2
- WO 2006103159 A1
- EP 1199794 A2
- EP 1561273 A1
- DE 102004016453 A1
- DE 102004016463 A1
- DE 102004016464 A1

**In der Beschreibung aufgeführte Nicht-Patentliteratur**

- **F. JOOS et al.** Field experience with the sequential combustion system of the GT24/GT26 gas turbine family. *ABB Review,* 1998, vol. 5, 12-20
- **L.J.J OFFRINGA ; L.J.J. et al.** A 1600 kW IGBT converter with interphase transformer for high speed gas turbine power plants. *Proc. IEEE - IAS Conf. 2000. 4,* 08. Oktober 2000, 2243-2248